# DEMANDE DE BREVET EUROPEEN

(11) **EP 1 555 848 A2**
(43) Date de publication de la demande: **20.07.2005**
(21) Numéro de dépôt: 05290057.8
(22) Date de dépôt: 10.01.2005
(51) Int. Cl.: H04Q 7/38, H04L 29/06

(54) **Procédé d'établissement d'une liaison multimédia avec fonction de repli vers une liaison audio dans un réseau mobile**

(30) Priorité: 14.01.2004 FR 0400325
(71) Demandeur: ALCATEL, 75008 Paris (FR)
(72) Inventeur: François, Gilles, 92160 Antony (FR); Lahore-Lahitte, Serge, 78650 Beynes (FR); Rzeznik, Jean, 92220 Bagneux (FR)
(74) Mandataire: El Manouni, Josiane

(57) **Abrégé**

Une installation de communications comporte au moins un réseau cellulaire de communications ne présentant pas une architecture de type NGN et auquel sont rattachés des terminaux de communication. Lorsque l'installation reçoit d'un terminal mobile appelant (T1) une demande d'établissement d'une liaison de type multimédia avec un terminal appelé (T2) (F1), elle tente d'établir cette liaison multimédia (F3-F4), et, en cas d'échec, elle tente d'établir une liaison audio entre les terminaux appelant et appelé (F5-F9).

## Description

L'invention concerne le domaine des réseaux de communications, et plus précisément l'établissement de liaisons au sein de tels réseaux.

Certains terminaux de communication sont agencés pour échanger des données non seulement de type audio mais également de type multimédia. On entend ici par « terminal de communication » tout équipement de réseau, fixe, mobile ou itinérant, capable d'échanger des données avec un réseau de communications, éventuellement de type mobile.

Comme le sait l'homme de l'art, lorsqu'un tel terminal, dit terminal appelant, souhaite échanger des données multimédia avec un terminal distant, dit terminal appelé, il doit tout d'abord adresser au réseau auquel il est lui-même raccordé (ou rattaché) une demande d'établissement de liaison multimédia désignant le terminal appelé, afin qu'il essaie d'établir la liaison demandée.

Or, lorsque le réseau auquel le terminal appelé est directement ou indirectement raccordé n'assure pas les liaisons (ou services) multimédia, ou lorsque le terminal appelé n'est pas adapté aux liaisons multimédia, la liaison demandée ne peut pas être établie.

Afin de permettre qu'une liaison soit malgré tout établie, il a été proposé une procédure de repli vers une demande d'établissement de liaison de type audio. Cette procédure de repli, qui est définie par le standard 3GPP TS 23.172, repose sur l'échange des types de transcodage (ou codec) supportés entre les terminaux appelant et appelé, le multimédia et l'audio étant chacun considéré comme un codec.

L'inconvénient de cette procédure de repli réside dans le fait que l'échange des codecs supportés ne peut se faire qu'au sein de réseaux mobiles dont l'architecture est dite de nouvelle génération (ou NGN pour « New Generation Network »). En d'autres termes, ce procédé de repli ne peut être mis en oeuvre que dans les situations dans lesquelles les réseaux de rattachement de l'appelant et de l'appelé et le ou les éventuels réseaux intermédiaires de transit présentent tous une architecture de type NGN.

L'invention a donc pour but d'améliorer la situation, notamment dans le cas d'installations de communications ne comportant pas, ou pas seulement, de réseaux de communications assurant des liaisons multimédia.

Elle propose à cet effet un procédé de repli d'une demande d'établissement de liaison de type multimédia vers une demande d'établissement de liaison de type audio au sein d'une installation de communications comportant au moins un réseau cellulaire de communications dont l'architecture n'est pas de type NGN, consistant, à réception d'une demande d'établissement de liaison de type multimédia entre un terminal appelant, de type mobile, et un terminal appelé, à tenter d'établir cette liaison avec le terminal appelé, puis, en cas d'échec, à tenter d'établir une liaison de type audio entre les terminaux appelant et appelé.

Il est ici rappelé que l'impossibilité d'établir une liaison de type multimédia peut résulter soit du fait que le réseau, auquel le terminal appelé est raccordé directement ou indirectement, n'assure pas ce type de liaison (ou service), soit du fait que le terminal appelé n'est pas adapté audit type de liaison.

Préférentiellement, lorsque l'on reçoit la demande d'établissement de la liaison multimédia on adresse au terminal appelant un accusé de réception lui signalant que sa demande va être prise en charge.

Par ailleurs, on procède à la tentative d'établissement de la liaison multimédia en adressant préférentiellement une demande d'établissement de liaison multimédia à un centre de commutation d'appelé, assurant la gestion des liaisons du terminal appelé.

Lorsque le centre de commutation d'appelé reçoit la demande, et qu'il constate que l'établissement requis est impossible, on génère un message de réponse comprenant préférentiellement des données représentatives de la cause de l'impossibilité (celle-ci est par exemple due à une non implémentation de liaison multimédia).

Lorsque le centre de commutation d'appelant reçoit du centre de commutation d'appelé l'indication que l'établissement de la liaison multimédia est impossible, il peut, éventuellement en fonction de la cause reçue, initier le repli en adressant au centre de commutation d'appelé une nouvelle demande d'établissement d'une liaison de repli de type audio, entre les terminaux appelant et appelé. Puis, lorsque le centre de commutation d'appelé reçoit la nouvelle demande, on peut générer un message de réponse comprenant des données représentatives de la possibilité ou de l'impossibilité d'établir une liaison audio avec le terminal appelé.

Par ailleurs, en cas de repli initié il est préférable de transmettre au terminal appelant un message lui signalant ce repli et requérant qu'il envoie un message d'acceptation (ou de refus) du repli. Ainsi, en cas d'acceptation du repli par le terminal appelant on poursuit l'établissement de la liaison audio entre les terminaux appelant et appelé.

La tentative d'établissement de la liaison de type multimédia et la tentative d'établissement de la liaison de type audio sont préférentiellement effectuées par le centre de commutation mobile auquel le terminal appelant est rattaché.

L'invention propose également un centre de commutation mobile, pour une installation de communications comportant au moins un réseau cellulaire de communications ne présentant pas une architecture de type NGN, comprenant des moyens de traitement agencés de manière à mettre en oeuvre un procédé de repli du type de celui présenté ci-avant.

L'invention est particulièrement bien adaptée, bien que de façon non exclusive, aux installations de communications comportant au moins un réseau cellulaire de communications de type GSM, GSM/GPRS ou UMTS.

D'autres caractéristiques et avantages de l'invention apparaîtront à l'examen de la description détaillée ci-après, et des dessins annexés, sur lesquels :
- la figure 1 illustre de façon schématique une partie d'une installation de communications permettant de mettre en oeuvre un procédé de repli selon l'invention, et
- la figure 2 illustre de façon schématique les principales étapes et des étapes complémentaires du procédé de repli selon l'invention.

Les dessins annexés pourront non seulement servir à compléter l'invention, mais aussi contribuer à sa définition, le cas échéant.

L'invention porte sur un procédé de repli et un centre de commutation mobile, destiné à mettre en oeuvre un tel procédé de repli au sein d'une installation de communications comportant au moins un réseau cellulaire de communications de type PLMN (pour « Public Land Mobile Network »), comme par exemple les réseaux dits « 2G », tels que les réseaux GSM, ou les réseaux dits « 2,5G », tels que les réseaux GSM/GPRS, ou encore les réseaux dits « 3G », tels que les réseaux UMTS, et ne présentant pas une architecture de type NGN.

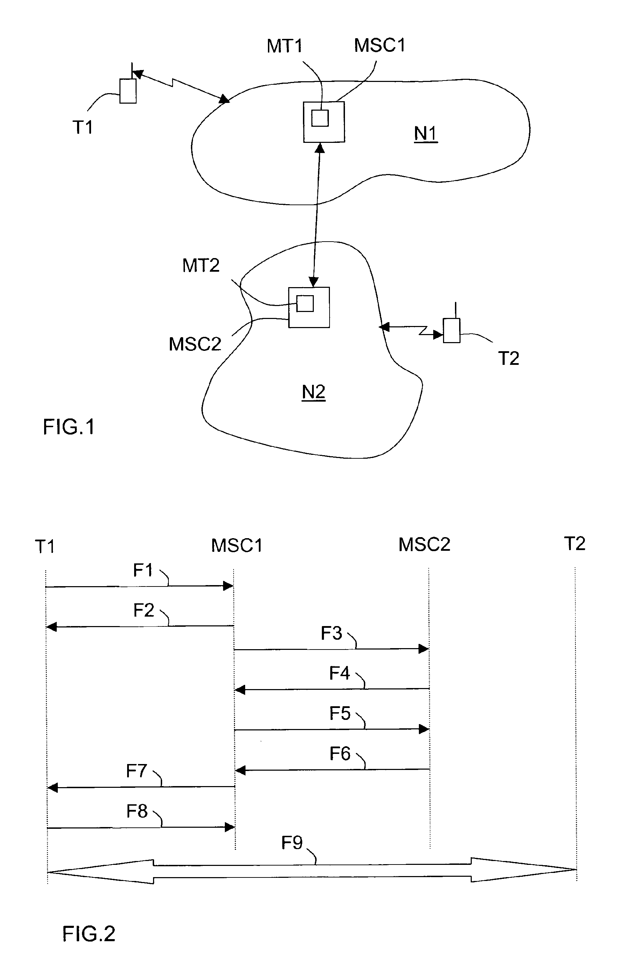

Dans l'exemple non limitatif illustré sur la figure 1, l'installation de communications comporte deux réseaux cellulaires N1 et N2. Par exemple, le réseau N1 est de type NGN et assure des services de type multimédia, tandis que le réseau N2 est de type GSM, assure des services de type audio, mais n'assure pas de service de type multimédia. Bien entendu, de nombreuses autres installations peuvent être envisagées, et notamment une installation comportant des réseaux de communications assurant des services de type multimédia (dont au moins un est de type cellulaire) mais raccordés entre eux par l'intermédiaire d'un ou plusieurs réseaux n'assurant pas de service de type multimédia, ou encore une installation ne comportant qu'un unique réseau cellulaire de communications assurant des services de type multimédia et ne présentant pas une architecture de type NGN, mais auquel sont raccordés des terminaux de communication adaptés pour certains aux liaisons de type multimédia, et pour d'autres aux seules liaisons de type audio.

On entend ici par « terminal de communication » tout équipement de réseau, fixe, mobile ou itinérant, capable d'échanger des données avec un réseau de communications, éventuellement de type mobile (ou cellulaire). Dans ce qui suit on considérera à titre illustratif que les terminaux de communication sont des téléphones mobiles. Mais, il pourrait s'agir de téléphone fixes ou d'assistants numériques personnels (ou PDAs pour « Personal Digital Assistants ») ou d'ordinateurs fixes ou portables équipés d'une interface radio de communication.

D'une manière générale, l'invention concerne toutes les situations dans lesquelles un premier terminal de communication, de type mobile, souhaite échanger des données de type multimédia avec un second terminal de communication, mais où l'échange est rendu impossible soit du fait que le réseau auquel le second terminal est directement ou indirectement raccordé n'assure pas les liaisons (ou services) multimédia, soit du fait que le second terminal appelé n'est pas adapté aux liaisons multimédia. Par conséquent, l'invention concerne les communications entre terminaux mobiles de types différents rattachés à un même réseau cellulaire de type PLMN (et non NGN), ou les communications entre terminaux mobiles, éventuellement de types différents, rattachés à des réseaux cellulaires de type PLMN mais différents (dont au moins l'un est non NGN), ou encore les communications entre terminaux mobiles et fixes rattachés à un réseau de type PSTN (pour « Public Switched Telephonic Network »), dès lors que ces réseaux supportent une signalisation permettant l'établissement de liaisons de type multimédia et de type audio, comme par exemple la signalisation de type ITU ISUP comme décrit ci-après.

L'invention ne portant pas sur l'architecture des réseaux de communications, celle-ci ne sera pas décrite en détail. Il est simplement rappelé qu'un réseau cellulaire comprend un réseau d'accès radio ou RAN (pour « Radio Access Network »), couplé par une interface à un coeur de réseau ou CN (pour Core Network ), lui-même éventuellement couplé à un ou plusieurs autres réseaux publics et/ou privés. Le coeur de réseau CN comporte un centre de commutation mobile MSC (pour « Mobile Switching Centre ») couplé à ladite interface et à au moins un autre réseau, tel qu'un réseau PLMN. Ce centre de commutation mobile MSC est chargé de réaliser les opérations nécessaires à la gestion des communications en mode circuit avec des terminaux mobiles T.

Par ailleurs, le réseau d'accès radio comporte généralement, d'une part, plusieurs noeuds ou contrôleurs de réseau radio, appelés RNCs (pour « Radio Network Controllers ») dans le cas d'un réseau UMTS et BSCs (pour « Base Station Controllers ») dans le cas d'un réseau de type GSM, et couplés au coeur de réseau CN, via l'interface précitée, et d'autre part, plusieurs stations de base d'émission/réception, appelées Node Bs dans le cas d'un réseau UMTS et BTSs dans le cas d'un réseau GSM, associées chacune à une ou plusieurs cellules couvrant chacune une zone radio, et couplées seules ou par groupe d'au moins deux à l'un des contrôleurs de réseau radio, via une interface logique.

On se réfère maintenant à la figure 2 pour décrire le procédé de repli d'une demande d'établissement de liaison de type multimédia vers une demande d'établissement de liaison de type audio, selon l'invention.

Lorsqu'un terminal mobile, dit terminal appelant, par exemple T1 qui est rattaché au premier réseau N1 et notamment à son centre de commutation mobile MSC1, est chargé par son utilisateur d'échanger des données multimédia avec un terminal distant, dit terminal appelé, par exemple T2 qui est rattaché au second réseau N2 et notamment à son centre de commutation mobile MSC2, il adresse tout d'abord à son réseau de rattachement N1 une demande d'établissement de liaison multimédia désignant le terminal appelé T2.

Cette demande est transmise via le réseau d'accès radio au coeur de réseau du réseau N1, qui le communique à son centre de commutation mobile MSC1 (comme cela est matérialisé par la flèche F1).

Cette demande, généralement appelée « SETUP message » comporte en complément de l'identifiant du terminal appelé T2 des données signalant que le terminal appelant T1 est adapté aux liaisons de types multimédia et audio. Préférentiellement, ces données sont des identifiants d'aptitude de service (ou « Bearer capability ») respectivement désignés par les acronymes BC1 et BC2.

Le centre de commutation mobile MSC1 comprend un module de traitement MT1 chargé de gérer la procédure de repli des terminaux qui lui sont rattachés.

De préférence et comme cela est matérialisé par la flèche F2, à réception de la demande (ou SETUP message) le module de traitement MT1 du centre de commutation mobile MSC1 transmet au terminal appelant T1 un message d'accusé de réception, appelé « CALL PROCEEDING », de manière à lui signaler qu'il a bien reçu sa demande et qu'elle va être traitée.

Sensiblement dans le même temps, ou juste après l'envoi de cet accusé de réception, et comme cela est matérialisé par la flèche F3, le module de traitement MT1 tente d'établir la liaison multimédia vers le terminal T2. Pour ce faire, il génère à destination du centre de commutation mobile MSC2, qui gère les liaisons du terminal appelé T2 désigné dans le demande reçue, une demande d'établissement d'une liaison multimédia désignant le terminal appelé T2, qui se présente dans l'exemple de signalisation de type ITU ISUP sous la forme d'un message de type « ISUP IAM » (pour « Initial Address Message »).

Ce message de type ISUP IAM est destiné à demander au centre de commutation mobile MSC2 s'il est possible d'établir une liaison multimédia avec le terminal appelé T2. Il contient à cet effet des données représentatives du type multimédia de la liaison requise, comme par exemple un champ TMR (pour « Transmission Medium Requirement ») dont la valeur est UDI 64 kbits/s. Comme évoqué précédemment, pour que la liaison puisse être établie il faut non seulement que le terminal appelé T2 soit adapté aux liaisons multimédia, mais également que le réseau de rattachement N2 offre un service multimédia.

Si la liaison multimédia peut être établie, sa procédure d'établissement se déroule classiquement, ce qui revient à passer directement à la flèche à double sens F9.

Si la liaison ne peut pas être établie, par exemple du fait que le réseau N2 n'assure pas le service multimédia, le module de traitement MT2 du centre de commutation mobile MSC2 génère un message de réponse, appelé « ISUP RELEASE message » dans l'exemple de signalisation de type ITU ISUP, et comprenant des données représentatives de la cause de l'impossibilité, comme par exemple un champ Cause dont la valeur peut être, par exemple, « BearerCapabilityNotlmplemented ». Comme cela est matérialisé par la flèche F4, ce message de réponse est transmis au centre de commutation mobile MSC1 ayant précédemment transmis le message de demande d'établissement d'une liaison multimédia.

Lorsque le centre de commutation mobile MSC1 reçoit le message de réponse, il le transmet à son module de traitement MT1 pour qu'il en analyse le contenu, et notamment celui du champ Cause. Ici, le module de traitement MT1 déduit de la valeur du champ Cause que la liaison multimédia ne peut pas être établie. Pour ce faire, le module de traitement MT1 compare de préférence la valeur du champ cause à au moins une cause choisie, comme par exemple la valeur BearerCapabilityNotImplemented, afin de ne procéder au repli que si cette cause est identique à la cause choisie.

Si tel est le cas, et comme cela est matérialisé par la flèche F5, le module de traitement MT1 tente d'établir une liaison de repli de type audio. Pour ce faire, il génère, à destination du centre de commutation mobile MSC2, une nouvelle demande d'établissement d'une liaison de repli de type audio, qui se présente dans l'exemple de signalisation de type ITU ISUP sous la forme d'un message de type ISUP IAM. Ce message complémentaire de repli, de type ISUP IAM, est destiné à demander au centre de commutation mobile MSC2 s'il est possible d'établir une liaison audio avec le terminal appelé T2. Il contient à cet effet des données représentatives du type audio de la liaison requise, comme par exemple un champ TMR dont la valeur est « 3,1 kHz audio » ou « speech ».

A réception du message complémentaire de repli, le module de traitement MT2 du centre de commutation mobile MSC2 génère un message de réponse, appelé « ISUP ACM message » (pour « Address Complete Message ») ou « ISUP CONNECT message » dans l'exemple de signalisation de type ITU ISUP, et comprenant des données représentatives de la réponse. Comme cela est matérialisé par la flèche F6, ce message de réponse complémentaire (ou de repli) est transmis au centre de commutation mobile MSC1 ayant précédemment transmis le message complémentaire de repli.

Lorsque le centre de commutation mobile MSC1 reçoit le message de réponse complémentaire, il le transmet à son module de traitement MT1 pour qu'il en analyse le contenu. Ici, le module de traitement MT1 déduit des données reçues que la liaison audio peut être établie.

Comme cela est matérialisé par la flèche F7, le module de traitement MT1 génère alors un message de repli, appelé « MODIFY message », à destination du terminal appelant T1. Ce message de repli comporte des données signalant le type (audio) de la liaison qui peut être établie avec le terminal appelé T2 et requérant l'envoi d'un message d'acceptation du repli. Préférentiellement, ces données constituent l'identifiant de type audio BC2.

Si le terminal appelant T1 accepte le repli, il génère à destination du centre de commutation MSC1, comme cela est matérialisé par la flèche F8, un message d'acceptation, appelé « MODIFY COMPLETE », comportant des données représentatives du type audio de la liaison acceptée. Préférentiellement, ces données constituent l'identifiant de type audio BC2.

A réception du message d'acceptation, le module de traitement MT1 du centre de commutation MSC1 déduit des données qu'il contient qu'il est autorisé à procéder au repli vers la liaison audio. Il poursuit alors l'établissement de la liaison audio entre le terminal appelant T1 et le terminal appelé T2, comme cela est matérialisé par la flèche F9, ce qui met fin à la procédure de repli.

D'autres messages n'ayant pas de relation directe avec l'invention peuvent être échangés entre les différents équipements impliqués dans l'établissement d'une liaison, et notamment les centres de commutation et/ou les terminaux appelant et appelé.

Les modules de traitement MT des centres de commutation MSC peuvent être réalisés sous la forme de circuits électroniques, de modules logiciels (ou informatiques), ou d'une combinaison de circuits et de logiciels.

L'invention ne se limite pas aux modes de réalisation de centre de commutation mobile, d'installation de communications, et de procédé de repli décrits ci-avant, seulement à titre d'exemple, mais elle englobe toutes les variantes que pourra envisager l'homme de l'art dans le cadre des revendications ci-après.

Ainsi, dans ce qui précède on a décrit, à titre d'exemple non limitatif, une installation dans laquelle les réseaux supportent une signalisation de type ITU ISUP. Mais, l'invention n'est pas limitée aux réseaux supportant ce type de signalisation. Elle concerne d'une manière générale tous les réseaux non NGN supportant une signalisation permettant l'établissement de liaisons de type multimédia et de type audio.

## Revendications

1. Procédé de repli d'une demande d'établissement de liaison de type multimédia vers une demande d'établissement de liaison de type audio dans une installation de communications comportant au moins un réseau cellulaire de communications (N) ne présentant pas une architecture de type NGN, **caractérisé en ce qu'**il consiste, à réception d'une demande d'établissement de liaison de type multimédia entre un terminal appelant (T1), de type mobile, et un terminal appelé (T2), à tenter d'établir ladite liaison multimédia avec ledit terminal appelé (T2), puis, en cas d'une impossibilité d'établir cette liaison multimédia, à tenter d'établir une liaison audio entre lesdits terminaux appelant (T1) et appelé (T2).

2. Procédé selon la revendication 1, **caractérisé en ce qu'**à réception de ladite première demande d'établissement de liaison de type multimédia on adresse audit terminal appelant (T1) un accusé de réception signalant la prise en charge de sa demande d'établissement de liaison.

3. Procédé selon l'une des revendications 1 et 2, **caractérisé en ce que** l'on procède à ladite tentative d'établissement en adressant une demande d'établissement de liaison multimédia à un centre de commutation d'appelé (MSC2), assurant la gestion des liaisons dudit terminal appelé (T2).

4. Procédé selon la revendication 3, **caractérisé en ce que** ladite demande est un message de type ISUP IAM.

5. Procédé selon l'une des revendications 3 et 4, **caractérisé en ce qu'**en cas d'impossibilité d'établissement de ladite liaison multimédia on génère un message de réponse comprenant des données représentatives de la cause de ladite impossibilité.

6. Procédé selon la revendication 5, **caractérisé en ce que** ledit message de réponse est de type ISUP RELEASE.

7. Procédé selon l'une des revendications 5 et 6, **caractérisé en ce qu'**à réception dudit message de réponse on analyse les données qu'il contient de manière à déterminer la cause de l'impossibilité d'établissement de la liaison multimédia, puis on compare ladite cause à au moins une cause choisie, de manière à procéder audit repli si ladite cause est identique à ladite cause choisie.

8. Procédé selon l'une des revendications 3 à 7, **caractérisé en ce qu'**après ladite tentative d'établissement d'une liaison multimédia on adresse audit centre de commutation d'appelé (MSC2) une nouvelle demande d'établissement d'une liaison de repli de type audio entre lesdits terminaux appelant (T1) et appelé (T2), et **en ce qu'**à réception de ladite nouvelle demande d'établissement on génère un message de réponse comprenant des données représentatives de la possibilité ou de l'impossibilité d'établir une liaison audio avec ledit terminal appelé (T2).

9. Procédé selon la revendication 8, **caractérisé en ce que** ladite nouvelle demande d'établissement est un message de type ISUP IAM.

10. Procédé selon l'une des revendications 8 et 9, **caractérisé en ce que** ledit message de réponse complémentaire est de type ISUP ACM ou ISUP CONNECT.

11. Procédé selon l'une des revendications 1 à 10, **caractérisé en ce qu'**en cas de possibilité de repli on transmet audit terminal appelant (T1) un message signalant la possibilité de repli et requérant de sa part l'envoi d'un message d'acceptation dudit repli, et **en ce qu'**à réception dudit message d'acceptation on poursuit l'établissement de la liaison de type audio entre lesdits terminaux appelant (T1) et appelé (T2).

12. Procédé selon l'une des revendications 1 à 11, **caractérisé en ce que** la gestion des liaisons dudit terminal appelant (T1 ) est assurée par un centre de commutation mobile d'appelant (MSC1), et **en ce que** ladite tentative d'établissement de la liaison de type multimédia et ladite tentative d'établissement de la liaison de type audio sont effectuées par ledit centre de commutation mobile d'appelant (MSC1).

13. Centre de commutation mobile (MSC) pour une installation de communications comportant au moins un réseau cellulaire de communications (N) ne présentant pas une architecture de type NGN, **caractérisé en ce qu'**il comprend des moyens de traitement (MT) agencés pour mettre en oeuvre un procédé de repli selon l'une des revendications précédentes.
